# EUROPÄISCHE PATENTSCHRIFT

(11) **EP 1 708 844 B1**
(45) Veröffentlichungstag und Bekanntmachung des Hinweises auf die Patenterteilung: **01.10.2008**
(21) Anmeldenummer: 05700743.7
(22) Anmeldetag: 07.01.2005
(51) Int. Cl.: B23K 20/10, B29C 65/74

(54) **VERFAHREN ZUM ABQUETSCHEN UND ABDICHTEN EINES ROHRES**
METHOD FOR CONSOLIDATING AND SEALING A TUBE
PROCEDE POUR COMPRIMER ET BOUCHER UN TUBE

(30) Priorität: 07.01.2004 DE 102004001294; 05.05.2004 DE 102004022509
(43) Veröffentlichungstag der Anmeldung: 11.10.2006
(73) Patentinhaber: Schunk Sonosystems GmbH, 35435 Wettenberg (DE)
(72) Erfinder: FRANK, Harald, 35396 Giessen (DE); NEIS, Dan, 61440 Oberursel (DE)
(74) Vertreter: Stoffregen, Hans-Herbert
(86) Internationale Anmeldenummer: PCT/EP2005/000088
(87) Internationale Veröffentlichungsnummer: WO 2005/065878

(56) Entgegenhaltungen:
- EP-B- 0 723 713
- WO-A-03/076116

## Beschreibung

Die Erfindung bezieht sich auf ein Verfahren zum Abquetschen und Abdichten eines Rohres, insbesondere eines metallischen Rohres zum Beispiel bestimmt für ein Gerät der Kühltechnik, wobei das Rohr zwischen einer Sonotrode und einer dieser zugeordneten Gegenelektrode wie Amboss einer Ultraschallschweißvorrichtung angeordnet, die Sonotrode erregt und relativ zu der Gegenelektrode zum Abquetschen und Abdichten des Rohres verstellt wird.

Bei Geräten und Anlagen zum Beispiel der Mess- bzw. Kühltechnik werden Rohre benutzt, die zunächst evakuiert und sodann mit einem Kühlgas befüllt werden. Hierzu werden Rohre mit einer Kupplung verbunden. Nach dem Befüllen muss der kupplungsseitige Abschnitt des Rohres abgetrennt werden. Hierzu ist es erforderlich, dass das Rohr, das zu der Anlage bzw. zum Gerät wie Kühlschrank oder Klimaanlage führt, fluiddicht verschlossen wird.

Nach dem Stand der Technik ist ein Verquetschen und Hartlöten bekannt. Auch gelangt eine Klebetechnik zur Anwendung, bei der das befüllte Rohr mit einer Kappe verschlossen wird, die ihrerseits mit dem Rohr verklebt wird.

Sofern ein fluiddichtes Verschließen mittels Hartlöten erfolgt, ist der Nachteil gegeben, dass dann, wenn das Rohr zuvor nicht dicht verquetscht wurde, sich in dem aufzutragendem Lot ein Schlot bildet, der vom aus dem Rohr austretenden Gas durchsetzt wird und somit ein Leck bildet. Unabhängig hiervon kann eine entsprechende Technik nur bei FCKW-Fluiden benutzt werden, da diese nicht brennbar sind.

Heutzutage ist das FCKW weitgehend durch Isobutan ersetzt, das jedoch hochexplosiv ist. Somit ist ein Hartlöten nicht mehr möglich. Daher hat sich das Ultraschallschweißen durchgesetzt, mit dem in einem Arbeitsgang ein Verquetschen und fluiddichtes Verschließen des zunächst evakuierten und sodann mit einem Kühlgas gefüllten Rohres möglich ist.

Bei den bekannten Ultraschallschweißvorrichtungen zum fluiddichten Verschließen von Rohren gelangen Sonotroden zum Einsatz, die eine erste Schweißfläche aufweisen, neben der ein Schneidelement verläuft. Entsprechend weist die zugeordnete Gegenelektrode - auch Ambos genannt - eine der ersten Schweißfläche zugeordnete zweite Schweißfläche auf, neben der ein dem Schneidelement zugeordnetes Gegenelement wie Kante verläuft.

Bei einem Verfahren der eingangs genannten Art nach der WO-A-03 07 6116 kann ein Abschnitt eines Rohres ohne Werkzeugwechsel oder Umpositionieren einer Ultraschallschweißvorrichtung derart getrennt werden, dass ein fluiddichtes Verschließen unabhängig davon erfolgt, auf welcher Seite der abzutrennende Abschnitt verläuft.

In Abhängigkeit von z. B. dem Durchmesser, Wandstärke und Material des Rohres müssen die Schweißparameter der Ultraschallschweißanlage individuell eingestellt werden, um im erforderlichen Umfang ein Abquetschen und Abdichten bzw. Verschweißen zu ermöglichen.

Aus der EP-B-0 723 713 sind ein Verfahren und eine Vorrichtung zum Kompaktieren und anschließenden Verschweißen von elektrischen Leitern bekannt. Um querschnittsunabhängig ein definiertes Schweißen durchzuführen, und zwar auch dann, wenn in willkürlicher Reihenfolge Leiter unterschiedlicher Querschnitte nacheinander verschweißt werden sollen, ist vorgesehen, dass die in einem Verdichtungsraum eingebrachten Leitern zunächst kompaktiert und anschließend eine charakteristische Größe des die kompaktierten Leiter aufnehmenden Verdichtungsraums bestimmt wird. Unter Zugrundelegung der charakteristischen Größe, wie z. B. Höhe oder Breite des Verdichtungsraums, werden sodann abgelegte Schweißparameter abgerufen.

Der vorliegenden Erfindung liegt das Problem zugrunde, ein Verfahren der eingangs genannten Art so weiterzubilden, dass ein automatisches Abquetschen und Abdichten eines Rohres erfolgen kann, ohne dass zuvor individuell die Daten des Rohres in eine Ultraschallschweißvorrichtung einzugeben sind.

Erfindungsgemäß ist zur Lösung des Problems im Wesentlichen vorgesehen:
- Anordnen des Rohres und Fixieren dieses zwischen der Sonotrode und der Gegenelektrode,
- Bestimmen zumindest einer charakteristischen Größe des Rohres bei zwischen der Sonotrode und der Gegenelektrode fixiertem Rohr,
- Abrufen von abgelegten Schweißparametern unter Zugrundelegung der zumindest einen charakteristischen Größe und
- Erregen der Sonotrode und Relativbewegung der Sonotrode und der Gegenelektrode zueinander zum Abquetschen und Abdichten des Rohres.

Erfindungsgemäß wird die Möglichkeit geschaffen, mittels einer Ultraschallschweißvorrichtung Rohre automatisch abzuquetschen und abzudichten bzw. zu verschweißen, ohne dass es erforderlich ist, zuvor der Ultraschallschweißvorrichtung die zum Abquetschen und Schweißen, also Abdichten des abgequetschten Rohrendes erforderlichen Daten zuzuführen, um daraufhin die erforderlichen Schweißparameter und Drücke zur Verfügung zu haben, die zu einem ordnungsgemäßen Abquetschen und Verschweißen bzw. Abdichten notwendig sind. Vielmehr wird zumindest eine charakteristische Größe nach Fixieren des Rohres zwischen der Sonotrode und der Gegenelektrode bestimmt, um sodann unter Berücksichtigung dieser Größe aus z. B. in einem Rechner abgelegten Daten automatisch die Parameter der Ultraschallschweißvorrichtung zur Verfügung zu haben, um ein ordnungsgemäßes Abquetschen und Abdichten bzw. Verschweißen des abgequetschten Rohrs durchführen zu können.

Bei der charakteristischen Größe kann es sich z. B. um den Außendurchmesser des Rohres handeln, der dadurch bestimmt wird, dass der Abstand zwischen der Sonotrode und der Gegenelektrode über zum Beispiel einem Wegnehmer bestimmt wird.

Vorzugsweise werden jedoch mehrere charakteristische Größen ermittelt. So kann neben dem Außendurchmesser bei einem elektrisch leitenden Rohr dessen elektrische Leitfähigkeit und/oder Wandstärke des Rohres ermittelt werden. Die Wandstärkenmessung kann dabei mittels Ultraschall z. B. nach dem Impulsechoverfahren erfolgen.

Als charakteristische Größe kommen jedoch auch zu bestimmende Materialeigenschaften wie Formänderungsarbeit oder Einschnürung in Frage. Zur Bestimmung der charakteristischen Größe kann dabei zum Beispiel die Sonotrode mit vorgegebener Kraft bzw. Druck zu der Gegenelektrode verstellt werden oder umgekehrt, um sodann aufgrund der erzielten Wegänderung Rückschlüsse auf die Materialeigenschaften des Rohres ziehen zu können. Dabei kann beim Verstellen Ultraschall auf das Rohr appliziert werden, um größere Wegänderungen und damit genauere Messungen zu ermöglichen.

Selbstverständlich ist es zuvor erforderlich, dass aufgrund einer Vielzahl von Messungen an Rohren unterschiedlicher Dimensionierungen und/oder Materialien hinreichend viel Daten ermittelt und abgespeichert werden, um aus sodann gewonnenen Tabellen die beim jeweiligen Schweißvorgang einem Rohr zuzuordnenden Daten ermitteln zu können. In den entsprechenden Tabellen sind insbesondere als Schweißparameter Schweißenergie, Schweißamplitude, Schweißzeit und Schweißdruck in Abhängigkeit von Rohrdurchmesser und/oder Wandstärke und/oder Rohrmaterial abgelegt.

Erfindungsgemäß ist vorgesehen, dass zur Ermittlung abzulegender Schweißparameter eine oder mehrere eine zeitliche Änderung von Energie, Kraft oder Leistung der in Ultraschallschwingung versetzten Sonotrode berücksichtigende Regelkurve bzw. Regelkurven beim Bestimmen von charakteristischen Größen wie Durchmesser und/oder Wanddicke von abzuquetschenden und abzudichtenden Normrohren aufgenommen werden, dass Ist-Kurven von sodann abzuquetschenden und zu verschweißenden Rohren unbekannten Durchmessers und/oder unbekannter Wandstärke mit so ermittelter Regelkurve bzw. ermittelten Regelkurven verglichen werden und bei Übereinstimmung mit einer Regelkurve die dieser zugeordneten Schweißparameter zum Abquetschen und Verschweißen der Rohre verwendet werden. Dabei wird bzw. werden die Regelkurve bzw. Regelkurven mit einem Toleranzband verbreitert, in die sodann Ist-Kurven von abzuquetschenden und zu verschweißenden Rohren eingepasst werden.

Insbesondere zeichnet sich die Erfindung dadurch aus, dass den Regelkurven Schweißparameter wie Druck-, Schweißdauer oder Energieeintrag zugeordnet werden, die zum Abquetschen und Verschweißen von beim Aufnehmen der Regelkurven verwendeten Normrohren ermittelt werden, dass zum Verschweißen eines Rohres unbekannter Größe eine Ist-Kurve aufgenommen und die Ist-Kurve in eine von mehreren Regelkurven eingepasst wird und dass das Rohr unbekannter Größe unter Zugrundelegung der der entsprechenden Regelkurve zugeordneten Schweißparameter abgequetscht und verschweißt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Prinzipdarstellung einer Ultraschallschweißmaschine und
- Fig. 2: ein Leistungszeitdiagramm.

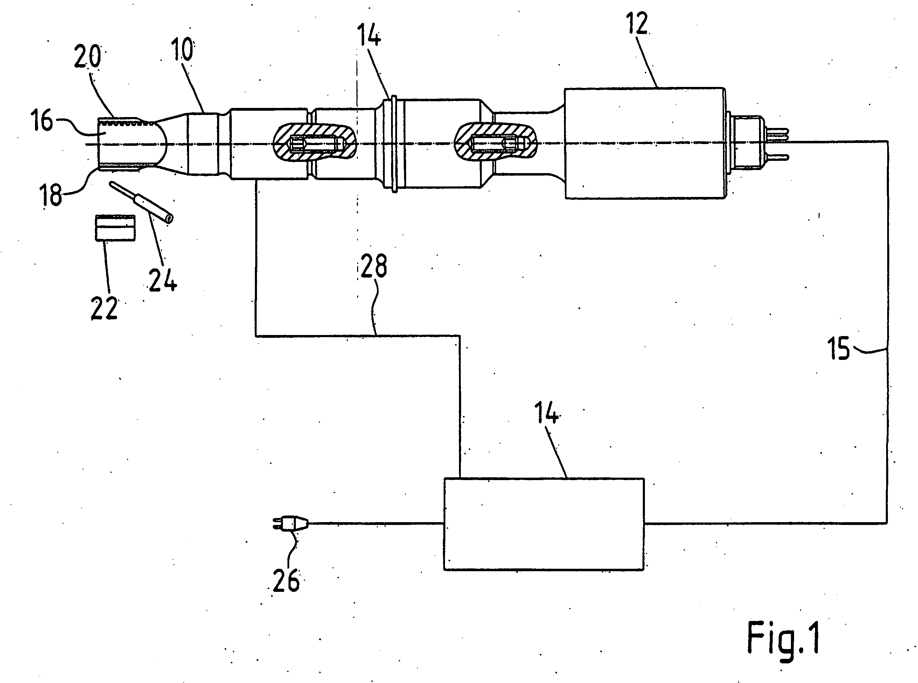

Der Fig. 1 ist ein schematischer Aufbau einer Ultraschallschweißmaschine zu entnehmen, die als wesentliche Bestandteile eine Sonotrode 10, einen Konverter 12 sowie eine Steuerung 14 ümfasst. Im Ausführungsbeispiel ist zwischen der Sonotrode 10 und dem Konverter 12 ein Booster 14 angeordnet, der als Amplitudentransformator zum Erzielen eines gewünschten Amplitudenbereichs und zur allgemeinen Stabilisierung des Schwingverhaltens im Schwingersystem dient.

Die Sonotrode 10 weist einen Sonotrodenkopf 16 mit gegenüberliegenden Arbeits- oder Schweißflächen 18 und 20 auf. Im Ausführungsbeispiel ist der Arbeits- oder Schweißfläche 18 eine als Amboss zu bezeichnende Gegenelektrode 22 zugeordnet, zwischen denen ein zum Beispiel aus Kupfer bestehendes Rohr 24 angeordnet wird, um dieses abzuquetschen und abzudichten, d. h. zu verschweißen. Gleichzeitig kann gegebenenfalls ein Abtrennen des Rohres auf einer Seite erfolgen. Hierzu sind in gewohnter Weise dem Sonotrodenkopf 16 bzw. den Arbeitsflächen 18, 20 sowie der Gegenelektrode 22 Schneidkanten zugeordnet, um den Rohrabschnitt abzuscheren.

Der Steuerung 14 wird über einen Anschluss 26 Netzspannung zugeführt, deren Frequenz in z. B. 20 kHz umgewandelt wird. Der Konverter 12 wandelt die elektrische Energie sodann in mechanische Schwingungsenergie um, wobei die mechanische Schwingungsfrequenz der elektrischen Frequenz der Steuerung 14 entspricht. Der zwischen Sonotrode 10 und dem Konverter 12 geschaltete Booster 14 dient erwähntermaßen derAmplitudentransformation zwischen Konverter 12 und Sonotrode 10. Die Steuerung 14 ist mit dem Konverter 12 über eine Steuerleitung 15 verbunden.

Die Güte des Abquetschens und Abdichtens des Rohres 24 hängt von der Amplitude des Sonotrodenkopfs 16, dem Schweißdruck (Betriebsdruck), der Schweißenergie, der Verdichtung sowie der Schweißzeit im Wesentlichen ab. Nach dem Stand der Technik werden die entsprechenden Daten in Abhängigkeit vom Außendurchmesser, Wandstärke und Material des Rohres 24 in die Steuerung 14 individuell eingegeben, um sodann den Quetsch- und Schweißvorgang und gegebenenfalls das Abtrennen des Rohrabschnitts durch Zusammenwirken des Sonotrodenkopfs 16 und des Ambosses oder Gegenelektrode 22 durchzuführen. Erfindungsgemäß ist nun vorgesehen, dass in der Steuerung 14 bzw. in einem nicht dargestellten Rechner eine Vielzahl von Schweißparametern, die die z. B. Amplitude der Sonotrode 10 bzw. der Arbeitsfläche 18, 20, den Schweißdruck, die Energie und die Schweißzeit sowie die Verdichtung umfassen, in Abhängigkeit von abzuquetschenden und zu verschweißenden Rohren, d. h. deren Durchmesser, Wandstärke und Material als beispielhaft einige charakteristische Größen abgelegt sind.

Nachdem das zu verschweißende Rohr 24 zwischen dem Amboss (Gegenelektrode 22) und der ersten Arbeitsfläche 18 der Sonotrode 10 angeordnet und die Sonotrode 10 in Richtung der zweiten Elektrode 22, also des Ambosses in einem Umfang abgesenkt worden ist, bis das Rohr 24 zwischen der ersten und zweiten Elektrode 18, 22 fixiert ist, wird der Abstand zwischen der Sonotrode 10 und der Gegenelektrode 22 bestimmt, um hieraus den Außendurchmesser des Rohrs 24 zu ermitteln. Der Abstand kann über einen Wegnehmer erfasst werden, wobei die entsprechenden Daten über eine Datenleitung 28 der Steuerung 14 bzw. dem Rechner zugeführt werden. Des Weiteren können charakteristische Materialeigenschaften des Rohres 24 ermittelt und ebenfalls über die Datenleitung 28 der Steuerung 14 bzw. dem Rechner zugeführt werden. Als charakteristische Materialwerte sind z. B. Festigkeit, elektrischer Widerstand oder Wandstärke zu nennen, die nach dem Fixieren des Rohres 24 zwischen der Sonotrode 10 und der Gegenelektrode 22 bzw. deren Schweißflächen ermittelt werden. Die Festigkeit kann dadurch bestimmt werden, dass nach dem Fixieren des Rohres 24 die Sonotrode 10 bei vorgegebenem Druck in Richtung der Gegenelektrode 22 verstellt wird. In Abhängigkeit von dem Verstellweg können Rückschlüsse auf das Material des Rohres 24 gezogen werden. Auch kann der elektrische Widerstand des Rohres 24 bestimmt werden. Mit z. B. im Bereich der zweiten Gegenelektrode 22 vorhandenem Sensor kann mittels Ultraschall die Wandstärke des Rohrs 24 gemessen werden. Andere geeignete Messverfahren sind gleichfalls möglich.

Unabhängig hiervon werden unter Zugrundelegung der auf zuvor beschriebener Weise beispielhaft angegebener Maßnahmen ermittelten charakteristischen Werte des Rohres 24 in der Steuerung 14 bzw. dem Rechner abgelegte Parameter abgerufen, die insbesondere Amplitude der Sonotrode 10, Schweißdruck, Schweißenergie, Verdichtung und Schweißzeit umfassen, um entsprechend die Sonotrode 10 zu erregen bzw. in Richtung der Gegenelektrode 22, also des Ambosses zu verstellen. Dabei wird das Rohr 24 im erforderlichen Umfang abgequetscht und verdichtet, d.h. verschweißt. Gleichzeitig kann ein Abscheren des nicht benötigten Rohrabschnittes erfolgen.

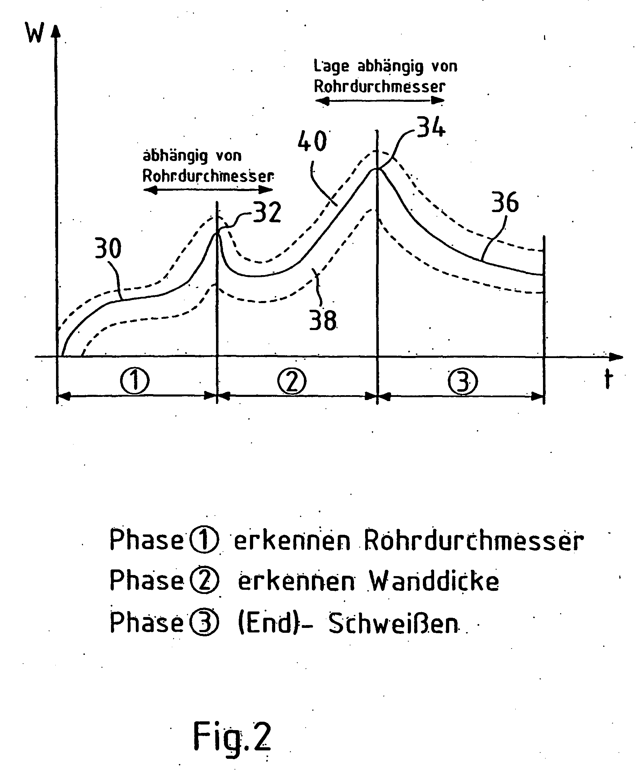

In der Fig. 2 soll anhand eines Leistungs-Zeit-Diagramms verdeutlicht werden, wie aus einer Verformungskurve charakteristische Parameter ermittelbar und somit ein Abquetschen und Verschweißen von Rohren automatisiert werden können.

So ist in Fig. 2 die Leistung W gegenüber der Zeit t beim Ermitteln einer Regelkurve für ein bekanntes Rohr eines bestimmten Durchmessers und einer bestimmten Wandstärke wiedergegeben. Die Kurve 30 weist zwei charakteristische Peaks 32, 34 auf, wobei der erste Peak 32 auftritt, wenn die Sonotrode 10 in Richtung der Gegenelektrode 22 derart abgesenkt ist, dass zwischen diesen ein zu messendes Normrohr festgeklemmt ist, also der Außendurchmesser bestimmbar ist. Dabei ist die Lage des ersten Peaks 32 abhängig vom Rohrdurchmesser. Bei weiterem Absenken bzw. Relativbewegen der Sonotrode 10 zu der Gegenelektrode 22 steigt die Leistungszunahme nach einem ersten Abfall an, um den zweiten Peak 34 zu durchlaufen. Die Lage des zweiten Peaks 34 hängt von der Wanddicke des Rohres ab. Sodann erfolgt das Zusammenquetschen und Abdichten des Rohres. Dies wird leistungsmäßig durch einen abfallenden Kurvenabschnitt 36 verdeutlicht.

Entsprechende Leistungs-Zeit-Kurven 30, die auch als Normkurven zu bezeichnen sind, werden nunmehr für eine Vielzahl von Rohren unterschiedlicher Durchmesser und Wanddicken aufgenommen. Sodann wird den entsprechenden Regelkurven ein Toleranzband 38, 40 zugeordnet.

Sollen nun Rohre unbekannter Durchmesser und Wanddicken abgequetscht und abgedichtet werden, so wird eine Ist-Kurve aufgenommen und diese in eine Regelkurve eingepasst. Unter Zugrundelegung der entsprechenden Regelkurve werden sodann Schweißparameter wie Druck, Schweißdauer oder Energieeintrag aus abgelegten Tabellen abgerufen, um das Rohr unbekannten Durchmessers und Wandstärke ordnungsgemäß abquetschen und abdichten zu können.

Mit anderen Worten erfolgt zunächst ein Einlehrmode, um für unterschiedliche Rohrdurchmesser von zum Beispiel 4, 6, 8, 12 mm und unterschiedlichen Wandstärken von zum Beispiel 0,6 mm - 1 mm Regelkurven entsprechend der Kurve 30 aufzunehmen, sodann ein Toleranzband festzulegen und abzuspeichern. Sodann wird ein Rohr unbekannten Durchmessers und Wandstärke zwischen der Sonotrode 10 und der Gegenelektrode 22 positioniert, die Sonotrode 10 und die Gegenelektrode 22 aufeinander zu bewegt, um sodann Rohrdurchmesser und Wanddicke aufgrund in der Ist-Kurve auftretenden Peaks zu ermitteln und die entsprechenden Werte mit Werten von Regelkurven zu vergleichen. Bei Vorliegen entsprechender Werte in einer Regelkurve werden sodann die weiteren zum ordnungsgemäßen Abquetschen und Abdichten erforderlichen Parameter abgerufen (Schweißmode).

## Patentansprüche

1. Verfahren zum Abquetschen und Abdichten eines Rohres, insbesondere eines metallischen Rohres zum Beispiel bestimmt für ein Kühlaggregat wobei das Rohr zwischen einer Sonotrode und einer dieser zugeordneten Gegenelektrode wie Amboss einer Ultraschallschweißvorrichtung angeordnet, die Sonotrode erregt und relativ zu der Gegenelektrode zum Abquetschen und Abdichten des Rohres verstellt wird,
**gekennzeichnet durch**
die Verfahrensschritte:
- Anordnen des Rohres und Fixieren dieses zwischen der Sonotrode und der Gegenelektrode,
- Bestimmen einer charakteristischen Größe des Rohres bei zwischen der Sonotrode und der Gegenelektroden fixiertem Rohr,
- Abrufen von abgelegten Schweißparametern unter Zugrundelegung der charakteristischen Größe und
- Erregen der Sonotrode, und Relativbewegung von der Sonotrode und der Gegenelektrode zueinander zum Abquetschen und Abdichten des Rohres.

2. Verfahren nach Anspruch 1,
**dadurch gekennzeichnet,**
**dass** als charakteristische Größe Abstand von der Sonotrode und der Gegenelektrode bei zwischen diesen fixiertem Rohr bestimmt wird.

3. Verfahren nach Anspruch 1,
**dadurch gekennzeichnet,**
**dass** als charakteristische Größe elektrische Leitfähigkeit des Rohres bestimmt wird.

4. Verfahren nach Anspruch 1,
**dadurch gekennzeichnet,**
**dass** als charakteristische Größe Wandstärke des Rohres bestimmt wird.

5. Verfahren nach Anspruch 1,
**dadurch gekennzeichnet,**
**dass** als charakteristische Größe Verformungsgrad des Rohres bestimmt wird.

6. Verfahren nach Anspruch 1,
**dadurch gekennzeichnet,**
**dass** zur Bestimmung des Verformungsgrads aufzubringender Druck zum Verstellen von der Sonotrode und der Gegenelektrode zueinander über eine vorgegebene Wegstrecke gemessen wird.

7. Verfahren nach Anspruch 1,
**dadurch gekennzeichnet,**
**dass** während des Verstellens der Sonotrode zu der Gegenelektrode die Sonotrode vorzugsweise mit Ultraschall erregt wird.

8. Verfahren nach Anspruch 1,
**dadurch gekennzeichnet,**
**dass** die Wandstärke vorzugsweise mittels Ultraschall bestimmt wird.

9. Verfahren nach Anspruch 1,
**dadurch gekennzeichnet,**
**dass** mehrere charakteristische Größen bestimmt und auf der Basis dieser abgelegte Schweißparameter abgerufen werden.

10. Verfahren nach Anspruch 1,
**dadurch gekennzeichnet,**
**dass** nach dem Abquetschen und Abdichten des Rohres ein Abschnitt dieses abgetrennt wie abgeschert wird.

11. Verfahren nach einem der vorhergehenden Ansprüche,
**dadurch gekennzeichnet,**
**dass** zur Ermittlung abzulegender Schweißparameter eine oder mehrere eine zeitliche Änderung von Energie, Kraft und/oder Leistung der in Ultraschallschwingung versetzten Sonotrode berücksichtigende Regelkurve bzw. Regelkurven beim Bestimmen von charakteristischen Größen wie Durchmesser und/oder Wanddicke von abzuquetschenden und abzudichtenden Normrohren aufgenommen werden, dass Ist-Kurven von sodann abzuquetschenden abzudichtenden Rohren unbekannten Durchmessers und/oder unbekannter Wandstärke mit so ermittelter Regelkurve bzw. ermittelten Regelkurven verglichen werden und unter Berücksichtigung gegebenenfalls vorgegebener Toleranzen bei Übereinstimmung mit einer Regelkurve die dieser zugeordneten Schweißparameter zum Abquetschen und Verschweißen der Rohre verwendet werden.

12. Verfahren nach Anspruch 11,
**dadurch gekennzeichnet,**
**dass** die Ist-Kurve mit mit einem Toleranzband verbreiterten Regelkurven verglichen wird.

13. Verfahren nach Anspruch 11,
**dadurch gekennzeichnet,**
**dass** den Regelkurven Schweißparameter wie Druck, Schweißdauer und/oder Energieeintrag zugeordnet werden, die zum Abquetschen und Verschweißen von beim Aufnehmen von Regelkurven verwendeten Normrohren ermittelt werden, dass zum Verschweißen eines Rohres unbekannter Größe eine Ist-Kurve aufgenommen und die Ist-Kurve in eine von mehreren Regelkurven eingepasst wird und dass das Rohr unbekannter Größe unter Zugrundelegung der der entsprechenden Regelkurve zugeordneten Schweißparameter abgequetscht und verschweißt wird.

## Claims

1. A method for squeezing off and sealing a tube, particularly a metal tube intended for example for a cooling unit, whereby the tube is positioned between a sonotrode and an associated counter electrode, such as the anvil, of an ultrasonic welding device, the sonotrode being activated and displaced relative to the counter electrode for squeezing off and sealing the tube,
**characterized by**
the method steps:
- positioning the tube and fixing it between the sonotrode and the counter electrode,
- determining a characteristic variable of the tube with the tube being fixed between the sonotrode and counter electrode,
- retrieving stored welding parameters on the basis of the characteristic variable, and
- activating the sonotrode and relative movement of the sonotrode and the counter electrode in relation to each other for squeezing off and sealing the tube.

2. A method according to claim 1,
**characterized in**
**that** as a characteristic variable is defined distance between the sonotrode and the counter electrode with the tube fixed between them.

3. A method according to claim 1,
**characterized in**
**that** as a characteristic variable is defined electrical conductivity of the tube.

4. A method according to claim 1,
**characterized in**
**that** as a characteristic variable is defined wall thickness of the tube.

5. A method according to claim 1,
**characterized in**
**that** as a characteristic variable is defined deformation level of the tube.

6. A method according to claim 1,
**characterized in**
**that** for determining the deformation level, pressure to be applied for displacing the sonotrode and the counter electrode to each other is measured across a defined distance.

7. A method according to claim 1,
**characterized in**
**that** during the displacement of the sonotrode to the counter electrode the sonotrode is preferably activated by means of ultrasound.

8. A method according to claim 1,
**characterized in**
**that** the wall thickness is preferably determined by means of ultrasound.

9. A method according to claim 1,
**characterized in**
**that** multiple characteristic variables are determined and welding parameters, stored on the basis of said variables, are retrieved.

10. A method according to claim 1,
**characterized in**
**that** following the squeezing off and sealing of the tube, a section of it is separated such as sheared off.

11. A method according to one of the preceding claims,
**characterized in**
**that** for determining welding parameters to be stored, one or more control curve or control curves taking into consideration a temporal change of energy, force and/or power of the sonotrode set into ultrasonic oscillation are recorded during the determination of characteristic variables, such as diameter and/or wall thickness of standard tubes to be squeezed off and sealed,
**that** actual curves of tubes to be squeezed off and sealed subsequently and with unknown diameter and/or unknown wall thickness are compared to control curve or control curves determined that way,
and **that** under consideration of optionally defined tolerances in the event of a correspondence with a control curve, the welding parameters associated with this curve are used for squeezing off and welding the tubes.

12. A method according to claim 11,
**characterized in**
**that** the actual curve is compared to control curves broadened by a tolerance range.

13. A method according to claim 11,
**characterized in**
**that** the control curves are associated with welding parameters such as pressure, welding duration and/or energy input, which are defined for squeezing off and welding standard tubes used during the recordation of control curves, that an actual curve is recorded for welding a tube with unknown size and the actual curve is fitted into one of several control curves, and that the tube with unknown size is squeezed off and welded on the basis of the welding parameters associated with the corresponding control curve.

## Revendications

1. Procédé pour comprimer et boucher un tube, en particulier un tube métallique, destiné par exemple à un groupe frigorifique, le tube étant disposé entre une sonotrode et une contre-électrode associée à celle-ci, telle qu'une enclume d'un dispositif de soudage à ultrasons qui active la sonotrode et la déplace relativement à la contre-électrode pour comprimer et boucher le tube,
**caractérisé par**
les étapes suivantes :
- Mise en place et fixation du tube entre la sonotrode et la contre-électrode,
- Détermination d'une caractéristique du tube lorsque celui-ci est fixé entre la sonotrode et la contre-électrode,
- Interrogation, sur la base de la caractéristique déterminée, de paramètres de soudage enregistrés, et
- Activation de la sonotrode et mise en mouvement relative de la sonotrode et de la contre-électrode pour comprimer et boucher le tube.

2. Procédé selon la revendication 1,
**caractérisé en ce**
**qu'**est déterminé, en tant que caractéristique, l'écart entre la sonotrode et la contre-électrode lorsque le tube est fixé entre ces dernières.

3. Procédé selon la revendication 1,
**caractérisé en ce**
**qu'**est déterminée, en tant que caractéristique, la conductivité du tube.

4. Procédé selon la revendication 1,
**caractérisé en ce**
**qu'**est déterminée, en tant que caractéristique, l'épaisseur du tube.

5. Procédé selon la revendication 1,
**caractérisé en ce**
**qu'**est déterminée, en tant que caractéristique, le degré de déformation du tube.

6. Procédé selon la revendication 1,
**caractérisé en ce**
**que**, pour déterminer le degré de déformation, est mesurée la pression à appliquer pour déplacer la sonotrode et la contre-électrode l'une par rapport à l'autre sur une distance prédéterminée.

7. Procédé selon la revendication 1,
**caractérisé en ce**
**que**, pendant le déplacement de la sonotrode par rapport à la contre-électrode, la sonotrode est activée de préférence par ultrasons.

8. Procédé selon la revendication 1,
**caractérisé en ce**
**que** l'épaisseur est déterminée de préférence à l'aide d'ultrasons.

9. Procédé selon la revendication 1,
**caractérisé en ce**
**que** plusieurs caractéristiques sont déterminées et que des paramètres de soudage enregistrés sont interrogés sur la base de ces mêmes caractéristiques.

10. Procédé selon la revendication 1,
**caractérisé en ce**
**que**, après compression et bouchage du tube, une section de celui-ci est détachée, par exemple tranchée.

11. Procédé selon une des revendications précédentes,
**caractérisé en ce**
**que**, pour déterminer les paramètres de soudage à enregistrer, une ou plusieurs courbe(s) de régulation prenant en compte une modification dans le temps de l'énergie, de la force et/ou de la puissance de la sonotrodc mise en vibration ultrasonore sont enregistrées lors de la détermination de caractéristiques telles que le diamètre et/ou l'épaisseur des tubes de référence à comprimer et à boucher, que des courbes réelles de tubes de diamètre et/ou d'épaisseur inconnus devant ensuite être comprimés et bouchés sont comparées à la / aux courbe(s) de régulation ainsi déterminée(s), et que, en prenant en compte les tolérances éventuellement prédéterminées, sont utilisés, lors d'une concordance avec une courbe de régulation, les paramètres de soudage associés à cette courbe pour la compression et le bouchage des tubes.

12. Procédé selon la revendication 11,
**caractérisé en ce**
**que** la courbe réelle est comparée avec des courbes de régulation élargies par une plage de tolérance.

13. Procédé selon la revendication 11,
**caractérisé en ce**
**que** des paramètres de soudage tels que la pression, la durée de soudage et/ou l'apport d'énergie, qui sont déterminés pour la compression et le bouchage de tubes de référence utilisés lors de l'enregistrement de courbes de régulation, sont attribués aux courbes de régulation, qu'une courbe réelle est enregistrée pour souder un tube de taille inconnue et la courbe réelle ajustée dans une courbe de régulation parmi plusieurs, et que le tube de taille inconnue est comprimé et soudé en fonction des paramètres de soudage associés à la courbe de régulation correspondante.
